# EUROPÄISCHE PATENTSCHRIFT

(11) **EP 1 032 470 B1**
(45) Veröffentlichungstag und Bekanntmachung des Hinweises auf die Patenterteilung: **13.02.2002**
(21) Anmeldenummer: 98965581.6
(22) Anmeldetag: 18.11.1998
(51) Int. Cl.: B01J 35/04, B01J 23/22, B01J 23/24, B01D 53/94

(54) **KATALYSATORKÖRPER**
CATALYST BODY
CORPS CATALYSEUR

(30) Priorität: 21.11.1997 DE 19751788
(43) Veröffentlichungstag der Anmeldung: 06.09.2000
(73) Patentinhaber: SIEMENS AKTIENGESELLSCHAFT, 80333 München (DE)
(72) Erfinder: PAJONK, Günther, D-96199 Zapfendorf (DE); GIRSCHIK, Andreas, D-96328 Tüschnitz (DE); KLEUDERLEIN, Robert, D-96264 Altenkunstadt (DE); WITZEL, Frank, D-96215 Lichtenfels (DE)
(86) Internationale Anmeldenummer: DE9803408
(87) Internationale Veröffentlichungsnummer: WO9926722

(56) Entgegenhaltungen:
- DE-A- 2 709 003
- DE-C- 2 819 378
- US-A- 4 448 828
- US-A- 5 516 571

## Beschreibung

Die Erfindung bezieht sich auf einen Katalysatorkörper, der eine Anzahl von in einer Vorzugsrichtung durchströmbaren Kanälen aufweist.

Katalysatoren werden beispielsweise zur Entfernung von Stickoxiden, Kohlenwasserstoffen, Kohlenmonoxid und/oder Dioxinen aus dem Abgas einer Verbrennungsanlage eingesetzt. Derartige Katalysatoren können als Wabenkatalysatoren ausgebildet sein. Bei einem Wabenkatalysator ist üblicherweise ein wabenförmiger Katalysatorkörper vorgesehen, der eine Anzahl von in einer Vorzugsrichtung von einer Flüssigkeit und/oder einem Gas, wie z.B. dem Abgas, durchströmbaren Kanälen aufweist.

Ein derartiger Wabenkatalysator kann zur Reduktion oder zur Oxidation von Schadstoffen vorgesehen sein. Ein als DeNOₓ-katalysator vorgesehener Wabenkatalysator reduziert beispielsweise nach dem sogenannten SCR-Verfahren (Verfahren der Selektiven Katalytischen Reduktion) unter Zugabe eines Reduktionsmittels Stickoxide (NOₓ) zu Stickstoff (N₂) und Wasser (H₂O). Eine gewisse SCR-Aktivität besitzt aber auch ein als Dioxin-Katalysator ausgebildeter Wabenkatalysator. Ein Dioxin-Katalysator oxidiert beispielsweise polychlorierte Dibenzodioxine/Dibenzofurane mit molekularem Sauerstoff.

Zur katalytischen Abgasreinigung von stationären oder mobilen Verbrennungsahlagen oder -maschinen werden Wabenkatalysatoren eingesetzt, deren Katalysatorkörper eine quadratische Kanalgeometrie aufweisen. Aus der DE 28 19 378 C2 ist ein Wabenkörper mit durchgeführten Zellen bekannt, die im wesentlichen eine rechteckige Grundform aufweisen. Dabei sind die Längsseiten einer ersten Gruppe der Kanäle annähernd rechtwinklig zu den Längsseiten einer zweiten Gruppe der Kanäle angeordnet. Die Anzahl der Kanäle kann dabei 10/6,452 cm² betragen. Auch die DE 37 13 209 A1 offenbart einen Wabenkörper mit annähernd rechteckförmigem Kanalquerschnitt. Ein keramischer Strukturkörper mit einem Wabenkörper, dessen Kanäle einen annähernd rechteckförmigen Querschnitt aufweisen, ist außerdem grundsätzlich aus "Haus der Technik", Prof. Dr.-Ing. E. Steinmetz (Hrsg.), Vulkan-Verlag Essen, (1992), S. 23, bekannt.

Es besteht allerdings bei derartigen Katalysatorkörpern die Gefahr der mechanischen Verstopfung der Wabenöffnungen mit Flugstaub. Um einen zuverlässigen Betrieb des Katalysators zu gewährleisten, ist daher eine regelmäßige, vergleichsweise aufwendige Reinigung des Katalysators notwendig. Zusätzlich besteht bei der Herstellung derartiger Katalysatorkörper das Problem, daß aufgrund der Eigenspannung der Katalysatorkörper Rißbildungen beim Fertigungsprozeß auftreten.

Der Erfindung liegt die Aufgabe zugrunde, einen Katalysatorkörper der oben genannten Art anzugeben, der bei nur geringem Reinigungsaufwand besonders zuverlässig betreibbar ist. Auch sollen Rißbildungen beim Fertigungsprozeß des Katalysatorkörpers besonders selten auftreten.

Diese Aufgabe wird durch einen Katalysatorkörper der oben genannten Art gelöst, bei dem jeder Kanal senkrecht zur Vorzugsrichtung einen durch eine Längsseite und eine im Vergleich dazu kürzere Querseite definierten annähernd rechteckförmigen Querschnitt aufweist, wobei die Anzahl der Kanäle im Bereich von 0,5 bis 2,5 cm⁻² liegt und die Längsseiten einer ersten Gruppe der Kanäle annähernd rechtwinklig zu den Längsseiten einer zweiten Gruppe der Kanäle angeordnet sind, und bei dem erfindungsgemäß die Kanäle zu Untergruppen zusammengefaßt sind, wobei die Kanäle jeder Untergruppe bezüglich ihrer Querschnitte eine annähernd quadratische Anordnung bilden, und wobei jede Untergruppe jeweils aus Kanälen derselben Gruppe besteht.

Die Erfindung geht dabei von der Überlegung aus, daß ein Katalysatorkörper auch bei geringem Reinigungsaufwand besonders zuverlässig funktioniert, wenn die Gefahr der mechanischen Verstopfung der Kanäle gering gehalten ist. Auch ein für eine besonders geringe Verstöpfungsgefahr der Kanäle ausgebildeter Katalysatorkörper sollte eine hohe katalytische Aktivität besitzen. Wie sich herausgestellt hat, ist dazu ein Katalysatorkörper besonders geeignet, bei dem die Anzahl der Kanäle pro Flächeneinheit im Bereich von 0,5 bis 2,5 cm⁻², vorzugsweise aber im Bereich von 0,9 bis 1,6 cm⁻², liegt und dessen Kanäle einen annähernd rechteckförmigen Querschnitt aufweisen.

Ein Maß für die katalytische Aktivität eines Katalysatorkörpers ist der sogenannte AP-Wert. Dieser ist definiert als das Verhältnis der geometrischen Oberfläche des Katalysatorkörpers zu seinem Raumvolumen. Bei gleichem AP-Wert weist ein Katalysatorkörper, dessen Kanäle einen annähernd rechteckförmigen Anströmquerschnitt besitzen, weniger Kanäle pro Flächeneinheit und somit weniger Kanalkanten auf, als ein Katalysatorkörper, dessen Kanalquerschnitte annähernd quadratförmig sind. Je kleiner die Anzahl der Kanalkanten ist, umso geringer ist die Tendenz zu einer mechanischen Verstopfung der Kanäle, da sich im Bereich der Kanalkanten bevorzugt Flugstaub ansammelt.

Um die Probleme der Eigenspannung bei der Herstellung der wabenförmigen Katalysatorkörper und die damit verbundene Rißbildung beim Fertigungsprozeß besonders gering zu halten, sind vorteilhafterweise die Längsseiten einer ersten Gruppe der Kanäle annähernd rechtwinklig zu den Längsseiten einer zweiten Gruppe der Kanäle angeordnet. Weiter sind die Kanäle zu Untergruppen zusammengefaßt, wobei jede Untergruppe aus Kanälen derselben Gruppe besteht. Bezüglich ihrer Querschnitte bilden die Kanäle einer Untergruppe eine annähernd quadratische Anordnung. Eine derartige Bildung von Untergruppen ermöglicht eine besonders einfache und flexible Anordnung der Kanäle im Katalysatorkörper. Benachbarte Untergruppen können dabei - je nach Zweckmäßigkeit - der ersten oder der zweiten Gruppe der Kanäle zugeordnet sein. In beiden Fällen ergibt sich eine besonders stabile Gesamtstruktur. Ein derartiger Katalysatorkörper hält bezüglich jeder Außenseite Kräften stand, die in Längs- und/oder in Querrichtung angreifen.

In einer vorteilhaften Ausgestaltung der Erfindung sind Untergruppen zu Schichten zusammengefaßt. Schichten, bei denen im Wechsel Untergruppen der ersten und der zweiten Gruppe der Kanäle angeordnet sind, erweisen sich als besonders zweckmäßig, da jede derart ausgebildete Schicht für sich besonders unempfindlich gegen Rißbildung beim Herstellungsprozeß ist.

In einer alternativen, vorteilhaften Ausgestaltung gehören alle Kanäle einer Schicht derselben Gruppe der Kanäle an.

Eine vorteilhafte Anordnung der Kanäle eines derartigen Katalysatorkörpers ist dadurch gegeben, daß die der ersten und die der zweiten Gruppe der Kanäle zugeordneten Schichten im Wechsel angeordnet sind.

Der Katalysatorkörper kann als Trägerkatalysator ausgebildet sein, bei dem ein Tragkörper mit einer katalytisch aktiven Schicht beschichtet ist. Vorteilhafterweise ist der Katalysatorkörper jedoch als Vollextrudat ausgebildet. In diesem Fall besteht der Katalysatorkörper ausschließlich aus Katalysatormaterial. Die Herstellung eines Vollextrudats kann mit Hilfe einer Extrudiermaschine erfolgen, die Formkörper aus einer weichen plastischen Masse erzeugt.

Die dem Gas und/oder der Flüssigkeit frei zugängliche Oberfläche jedes Kanales kann bevorzugt die Materialien Titandioxid (TiO₂) zu 70 bis 95 Gew.-%, Wolframtrioxid (WO₃) und/oder Molybdäntrioxid (MoO₃) zu 5 bis 20 Gew.-% und Vanadinpentoxid (V₂O₅) zu weniger als 5 Gew.-% aufweisen. Ein derartiger Katalysatorkörper ist vorteilhafterweise als DeNOₓ-Katalysator vorgesehen.

Die mit der Erfindung erzielten Vorteile bestehen insbesondere darin, daß der vorliegende ein Katalysatorkörper, dessen Kanäle senkrecht zur Vorzugsrichtung einen annähernd rechteckförmigen Querschnitt aufweisen, bei gleichem AP-Wert eine geringere Gefahr der mechanischen Verstopfung der Kanäle aufweist als ein Katalysatorkörper, dessen Kanäle einen annähernd quadratischen Querschnitt aufweisen. Ein Katalysatorkörper, dessen Anzahl der Kanäle im Bereich von 0,5 bis 2,5 cm⁻² liegt, weist einen besonders hohen AP-Wert und eine besonders geringe Gefahr der mechanischen Verstopfung der Kanäle auf. Der Katalysatorkörper ist somit auch für einen Einsatz in kohlebefeuerten Kraftwerken besonders geeignet. Das Rauchgas kann dabei für Vollwertkohle eine Flugstaubbelastung von 6 bis 20 g pro Normkubikmeter, für Ballastkohle von 6 bis 50 g pro Normkubikmeter aufweisen. Dabei ist durch die Untergruppenbildung der Kanäle eine besonders einfache Anpassung des Umfangs des Katalysatorkörpers an verschiedene geometrische Ausbildungen gewährleistet und der Fertigungsaufwand für einen derartigen Katalysatorkörper besonders gering gehalten.

Ausführungsbeispiele der Erfindung werden anhand einer Zeichnung näher erläutert. Darin zeigen:
- FIG 1: schematisch eine DeNOₓ-Katalysator-Moduleinheit aus neun Katalysatorkörpern,
- FIG 2: im Ausschnitt einen Katalysatorkörper gemäß Figur 1 im Querschnitt in einer ersten Ausführung und
- FIG 3: im Ausschnitt einen Katalysatorkörper gemäß Figur 1 im Querschnitt in einer zweiten Ausführung.

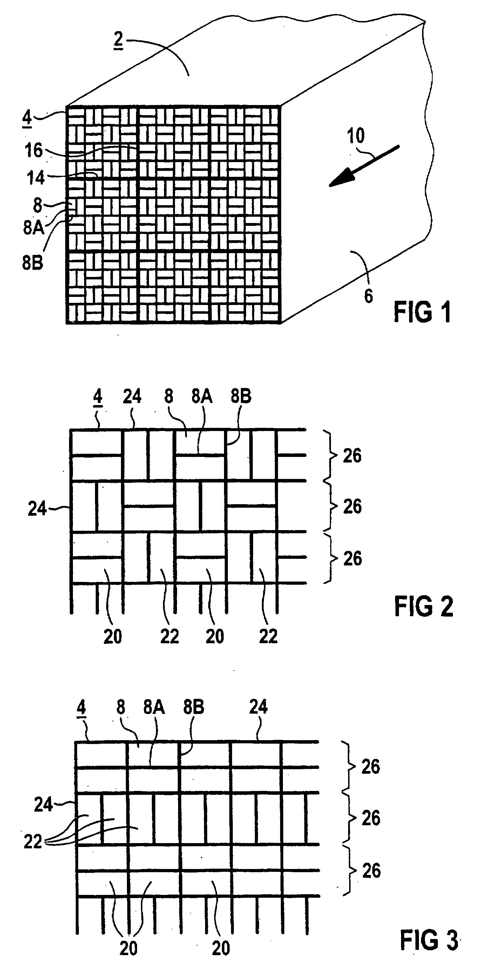

Die DeNOₓ-Katalysator-Moduleinheit 2 gemäß Figur 1 umfaßt eine Anzahl von jeweils gleichartigen Katalysatorkörpern 4, die in einem Gehäuse 6 angeordnet sind. Dabei kann eine DeNOₓ-Katalysator-Moduleinheit auch mehr oder weniger Katalysatorkörper 4 umfassen als es die Figur 1 zeigt. Jeder Katalysatorkörper 4 umfaßt eine Anzahl von Kanälen 8, die in einer Vorzugsrichtung 10 vom Abgas einer Verbrennungsanlage durchströmbar sind und senkrecht zur Vorzugsrichtung 10 einen annähernd rechteckförmigen Querschnitt aufweisen. Jeder Kanal 8 ist durch eine Längsseite 8A und eine im Vergleich dazu kürzere Querseite 8B begrenzt.

Die Außenwände 14 und 16 des jeweiligen Katalysatorkörpers 4 weisen jeweils eine Länge von 150 mm auf. Die Kanäle 8 sind derart dimensioniert, daß sich die Anzahl der Kanäle pro Flächeneinheit im Bereich von 0,5 bis 2,5 cm⁻² befindet. Damit liegt die Anzahl der Kanäle 8 im Bereich von 112 bis 562 pro Katalysatorkörper 4. Diese Kanäle 8 sind in der schematischen Zeichnung der Figur 1 nicht eingezeichnet, sondern nur angedeutet.

Die Katalysatorkörper 4 sind jeweils als Vollextrudat ausgebildet und umfassen die Materialien Titandioxid (TiO₂) zu 70 bis 95 Gew.-%, Wolframtrioxid (WO₃) und/oder Molybdäntrioxid (MoO₃) zu 5 bis 20 Gew.-% und Vanadinpentoxid (V₂O₅) zu weniger als 5 Gew.-%. Alternativ kann ein Katalysatorkörper 4 auch einen Träger umfassen, der eine Beschichtung aus den oben angegebenen Materialien aufweist.

Die Figuren 2 und 3 zeigen im Ausschnitt einen Katalysatorkörper 4 gemäß Figur 1 im Querschnitt in einer ersten und in einer zweiten Ausführung. In beiden Ausführungen sind die Kanäle 8 in eine erste Gruppe 20 und eine zweite Gruppe 22 aufgeteilt. Die Kanäle 8 der ersten Gruppe 20 sind hinsichtlich ihrer Längsseiten 8A in einem rechten Winkel zu den Kanälen 8 der zweiten Gruppe 22 angeordnet. Die Gruppen 20, 22 der Kanäle 8 umfassen jeweils Untergruppen 24. Eine Untergruppe 24 ist dabei aus zwei benachbarten Kanälen 8 derselben Gruppe 20, 22 gebildet. Die Kanäle 8 einer Untergruppe bilden dabei bezüglich ihrer Querschnitte eine annähernd quadratische Anordnung. Eine Anzahl von Untergruppen 24 wiederum bildet jeweils eine Schicht 26.

Im Ausführungsbeispiel gemäß Figur 2 sind in jeder Schicht 26 im Wechsel Untergruppen 24 der ersten Gruppe 20 der Kanäle 8 und der zweiten Gruppe 22 der Kanäle 8 angeordnet. Die Längsseiten 8A eines jeden Kanales 8 weisen eine Länge von 11,36 mm auf, ihre jeweiligen Querseiten 8B eine Länge von jeweils 5,16 mm. Die Anzahl der Kanäle 8 pro Flächeneinheit jedes Katalysatorkörpers 4 beträgt 1,28 cm⁻². Somit umfaßt jeder Katalysatorkörper 288 Kanäle und weist bei einem freien Anströmquerschnitt von 75% einen AP-Wert von 423 m²/m³ auf.

Im Ausführungsbeispiel gemäß Figur 3 ist eine Schicht 26 jeweils ausschließlich aus Kanälen 8 einer der Gruppen 20 bzw. 22 aufgebaut. Die Schichten 26 sind derart im Wechsel angeordnet, daß benachbarte Schichten 26 nicht derselben Gruppe 20, 22 der Kanäle 8 zuzuordnen sind. Die Längsseiten 8A eines jeden Kanals 8 des Katalysatorkörpers 4 gemäß Figur 3 weisen eine Länge von 11,59 mm auf, ihre jeweiligen Querseiten 8B eine Länge von 5,39 mm. Jeder Katalysatorkörper 4 umfaßt 288 Kanäle. Somit beträgt die Anzahl der Kanäle 8 pro Flächeneinheit 1,28 cm⁻². Bei einem freien Anströmquerschnitt von 80% weist jeder Katalysatorkörper 4 einen AP-Wert von 435 m²/m³ auf.

Beide Ausführungsbeispiele des Katalysatorkörpers 4 gemäß den Figuren 2 und 3 weisen einen besonders hohen AP-Wert und eine besonders geringe Gefahr der mechanischen Verstopfung der Kanäle 8 auf. Deswegen sind derartige Katalysatorkörper 4 für den Einsatz bei der Entfernung von Schadstoffen aus dem Abgas einer Verbrennungsanlage besonders gut geeignet. Dabei besitzen die Katalysatorkörper 4 bei nur geringem Reinigungsaufwand eine besonders hohe Zuverlässigkeit. Außerdem ist durch die Untergruppenbildung der Kanäle 8 eine besonders einfache Anpassung des Umfangs des jeweiligen Katalysatorkörpers 4 an verschiedene geometrische Ausbildungen gewährleistet und der Fertigungsaufwand für die einzelnen Katalysatorkörper 4 besonders gering gehalten.

## Patentansprüche

1. Katalysatorkörper (4) mit einer Anzahl von in einer Vorzugsrichtung (10) durchströmbaren Kanälen (8), von denen jeder senkrecht zur Vorzugsrichtung (10) einen durch eine Längsseite (8A) und eine im Vergleich dazu kürzere Querseite (8B) definierten annähernd rechteckförmigen Querschnitt aufweist, wobei die Anzahl der Kanäle (8) pro Flächeneinheit im Bereich von 0,5 bis 2,5 cm⁻² liegt und bei dem die Längsseiten (8A) einer ersten Gruppe (20) der Kanäle (8) annähernd rechtwinklig zu den Längsseiten (8A) einer zweiten Gruppe (22) der Kanäle (8) angeordnet sind,
**dadurch gekennzeichnet, daß** die Kanäle (8) zu Untergruppen (24) zusammengefaßt sind, daß die Kanäle (8) jeder Untergruppe (24) bezüglich ihrer Querschnitte eine annähernd quadratische Anordnung bilden, und daß jede Untergruppe (24) jeweils aus Kanälen (8) derselben Gruppe (20, 22) besteht.

2. Katalysatorkörper (4) nach Anspruch 1, bei dem die Anzahl der Kanäle (8) pro Flächeneinheit im Bereich von 0,9 bis 1, 6 cm⁻² liegt.

3. Katalysatorkörper (4) nach Anspruch 1 oder 2, bei dem die Untergruppen (24) Schichten (26) bilden, wobei in jeder Schicht (26) im Wechsel Untergruppen (24) der ersten Gruppe (20) und der zweiten Gruppe (22) angeordnet sind.

4. Katalysatorkörper (4) nach Anspruch 1 oder 2, bei dem die Untergruppen (24) Schichten (26) bilden, wobei alle Kanäle (8) einer Schicht (26) derselben Gruppe (20, 22) der Kanäle (8) angehören.

5. Katalysatorkörper (4) nach Anspruch 4, bei dem die der ersten Gruppe (20) und die der zweiten Gruppe (22) der Kanäle (8) zugeordneten Schichten (26) im Wechsel angeordnet sind.

6. Katalysatorkörper (4) nach einem der Ansprüche 1 bis 5, der als Vollextrudat ausgebildet ist und die Materialien Titandioxid ( TiO₂) zu 70 bis 95 Gew.-%, Wolframtrioxid ( WO₃) und/oder Molybdäntrioxid (MoO₃) zu 5 bis 20 Gew.-% und Vanadinpentoxid (V₂O₅) zu weniger als 5 Gew.-% umfaßt.

7. DeNOₓ-Katalysator-Moduleinheit (2) mit einer Mehrzahl von Katalysatorkörpern (4) nach einem der Ansprüche 1 bis 6.

## Claims

1. Catalyst body (4) having a number of passages (8) through which a medium can flow in a preferred direction (10) and each of which, at right angles to the preferred direction (10), is approximately rectangular in cross section, as defined by a longitudinal side (8A) and a shorter transverse side (8B), the number of passages (8) per unit surface area lying in the range from 0.5 to 2.5 cm⁻², and in which the longitudinal sides (8A) of a first group (20) of the passages (8) are arranged approximately at right angles to the longitudinal sides (8A) of a second group (22) of the passages (8), **characterized in that** the passages (8) are combined to form subgroups (24), **in that** the passages (8) of each subgroup (24), in terms of their cross sections, form an approximately square arrangement, and **in that** each subgroup (24) comprises in each case passages (8) from the same group (20, 22).

2. Catalyst body (4) according to Claim 1, in which the number of passages (8) per unit surface area lies in the range from 0.9 to 1.6 cm⁻².

3. Catalyst body (4) according to Claim 1 or 2, in which the subgroups (24) form layers (26), subgroups (24) of the first group (20) and the second group (22) being arranged alternately in each layer (26).

4. Catalyst body (4) according to Claim 1 or 2, in which the subgroups (24) form layers (26), all the passages (8) in one layer (26) belonging to the same group (20, 22) of passages (8).

5. Catalyst body (4) according to Claim 4, in which the layers (26) assigned to the first group (20) and the layers (26) assigned to the second group (22) of passages (8) are arranged alternately.

6. Catalyst body (4) according to one of Claims 1 to 5, which is designed as an unsupported extrudate and comprises the materials titanium dioxide (TiO₂) in a proportion of 70 to 95% by weight, tungsten trioxide (WO₃) and/or molybdenum trioxide (MoO₃) in a proportion of 5 to 20% by weight, and vanadium pentoxide (V₂O₅) in a proportion of less than 5% by weight.

7. DeNOₓ catalyst modular unit (2) comprising a plurality of catalyst bodies (4) according to one of Claims 1 to 6.

## Revendications

1. Corps (4) de pot catalytique comprenant un certain nombre de canaux (8) qui peuvent être parcourus dans une direction (10) préférée, parmi lesquels celui qui est perpendiculaire à la direction (10) préférée a une section transversale sensiblement rectangulaire, définie par un côté (8A) longitudinal et un côté (8B) transversal comparativement plus court, le nombre des canaux (8) par unité de surface étant de l'ordre de 0,5 à 2,5 cm⁻² et dans lequel les côtés (8A) longitudinaux d'un premier groupe (20) de canaux (8) sont disposés sensiblement à angle droit des côtés (8A) longitudinaux d'un deuxième groupe (22) de canaux (8),
**caractérisé en ce que** les canaux (8) sont rassemblés en sous-groupes (24), **en ce que** les canaux (8) de chaque sous-groupe (24) forment pour ce qui concerne leurs sections transversales un agencement approximativement carré et **en ce que** chaque sous-groupe (24) est constitué respectivement de canaux (8) du même groupe (20,22).

2. Corps (4) de pot catalytique suivant la revendication 1, dans lequel le nombre des canaux (8) par unité de surface est de l'ordre de 0,9 à 1,6 cm⁻².

3. Corps (4) de pot catalytique suivant la revendication 1 ou 2, dans lequel les sous-groupes (24) forment des couches (26), des sous-groupes (24) du premier groupe (20) et du deuxième groupe (22) étant disposés en alternance dans chaque couche (26).

4. Corps (4) de pot catalytique suivant la revendication 1 ou 2, dans lequel les sous-groupes (24) forment des couches (26), tous les canaux (8) d'une couche (26) appartenant au même groupe (20, 22) de canaux (8).

5. Corps (4) de pot catalytique suivant la revendication 4, dans lequel les couches (26) associées au premier groupe (20) et celles associées au deuxième groupe (22) de canaux (8) sont disposées en alternance.

6. Corps (4) de pot catalytique suivant l'une des revendications 1 à 5, qui est constitué en produit extrudé plein et les matériaux comprennent du dioxyde de titane (TiO₂) pour 70 à 95% en poids, du trioxyde de tungstène (WO₃) et/ou du trioxyde de molybdène (MoO₃) pour 5 à 20% en poids et du pentoxyde de vanadium (V₂O₅) pour moins de 5% en poids.

7. Unité (2) modulaire de catalyseur DeNOₓ ayant une multiplicité de corps (4) de pot catalytique suivant l'une des revendications 1 à 6.
